# EUROPÄISCHE PATENTSCHRIFT

(11) **EP 2 036 263 B1**
(45) Veröffentlichungstag und Bekanntmachung des Hinweises auf die Patenterteilung: **04.11.2009**
(21) Anmeldenummer: 07763735.3
(22) Anmeldetag: 04.07.2007
(51) Int. Cl.: H04L 12/413

(54) **VERFAHREN UND EINRICHTUNG ZUM AUFBAU EINES KOMMUNIKATIONSSYSTEMS AUF DER BASIS VON CAN KOMMUNIKATIONSKONTROLLERN MIT ERHÖHTEM DATENDURCHSATZ**
METHOD AND DEVICE FOR THE CREATION OF A COMMUNICATION SYSTEM BASED ON CAN COMMUNICATION CONTROLLERS FEATURING AN INCREASED DATA THROUGHPUT
PROCÉDÉ ET ÉQUIPEMENT DE L'ÉTABLISSEMENT D'UN SYSTÈME DE COMMUNICATION À BASE CONTRÔLEURS DE COMMUNICATION CAN AVEC DÉBIT DE DONNÉES ACCRU

(30) Priorität: 05.07.2006 AT 11492006
(43) Veröffentlichungstag der Anmeldung: 18.03.2009
(73) Patentinhaber: TTTech Computertechnik AG, 1040 Wien (AT)
(72) Erfinder: BERGNER, Alexander, 1190 Wien (AT)
(74) Vertreter: Patentanwaltskanzlei Matschnig & Forsthuber OG
(86) Internationale Anmeldenummer: PCT/AT2007/000335
(87) Internationale Veröffentlichungsnummer: WO 2008/003112

(56) Entgegenhaltungen:
- WO-A-95/06378
- LEEN G ET AL: "TTCAN: a new time-triggered controller area network" MICROPROCESSORS AND MICROSYSTEMS, IPC BUSINESS PRESS LTD. LONDON, GB, Bd. 26, Nr. 2, 17. März 2002 (2002-03-17), Seiten 77-94, XP004339936 ISSN: 0141-9331
- LUÍS ALMEIDA ET AL: "The FTT-CAN Protocol: Why and How" IEEE TRANSACTIONS ON INDUSTRIAL ELECTRONICS, IEEE SERVICE CENTER, PISCATAWAY, NJ, US, Bd. 49, Nr. 6, Dezember 2002 (2002-12), XP011073783 ISSN: 0278-0046

## Beschreibung

Die Erfindung betrifft ein Verfahren zum Übertragen von Nachrichten in einem Kommunikationssystem, welches mehrere Netzknoten mit je zumindest einem CAN-Kontroller aufweist, wobei eine Arbitrierungsentscheidung in einer höheren Protokollschicht als die Übertragung der CAN-Nachricht erfolgt.

Weiters betrifft die Erfindung ein Kommunikationssystem, welches mehrere Netzknoten mit je zumindest einem CAN-Kontroller aufweist.

Die in diesem Dokument verwendeten Fachausdrücke und Abkürzungen entsprechen der im Rahmen von "Controller Area Network-Systemen", kurz "CAN"-Systemen, verwendeten Fachterminologie.

Der Einsatz von vielen elektronischen Controlunits (ECUs) in Kraftfahrzeugen - aber auch in anderen Bereichen - verlangt nach einem Kommunikationssystem mit hohem Datendurchsatz. Bisher konnten mit dem von Bosch eingeführten und in der "CAN Specification Version 2.0, Sep. 1991" beschriebenen Controller Area Network (CAN) die Erfordernisse der Datenkommunikation weitgehend erfüllt werden. Die oben erwähnte Spezifikation kann beispielsweise unter *http*//*www.can.bosch.com*/*docu*/*can2spec.pdf frei* herunter geladen werden. Die Realisierung neuer Funktionen durch die Elektronik (z. B. Fahrwerkregelsysteme) erfordert Kommunikationsleistungen, die über die Grenze der bestehenden CAN-Systeme hinausgeht. Die Datenrate bisheriger CAN Netzwerke ist weitgehend durch die Verzögerungen in den Bustreibern in Kombination mit den Datenleitungen limitiert. Konkret ist der limitierende Faktor die Notwendigkeit, alle am CAN-Bus befindlichen CAN-Kommunikationsknoten auf den Bruchteil der Dauer einer Bit-Zelle zu synchronisieren. Mehrere durch die CAN Spezifikation Version 2.0 festgelegte Protokollmerkmale, die von allen CAN-Kommunikationsknoten eingehalten werden müssen, erfordern die Gleichzeitigkeit von CAN-Protokoll-konformen Aktionen der CAN-Kommunikationsknoten. Dies ist insbesondere bei dem für das CAN-Protokoll üblichen Emfangsbestätigung, dem sogenannten Acknowledge, und bei der Arbitrierung der Fall.

Eine Erweiterung des CAN, das zeitgesteuerte TTCAN (Time-triggered CAN), ist in dem Dokument "TTCAN: a new time-triggered controller area network" von G. Leen und D. Heffernan (Microprocessors and Microsystems, Bd. 26, Seiten 77-94, 17. März 2002) beschrieben.

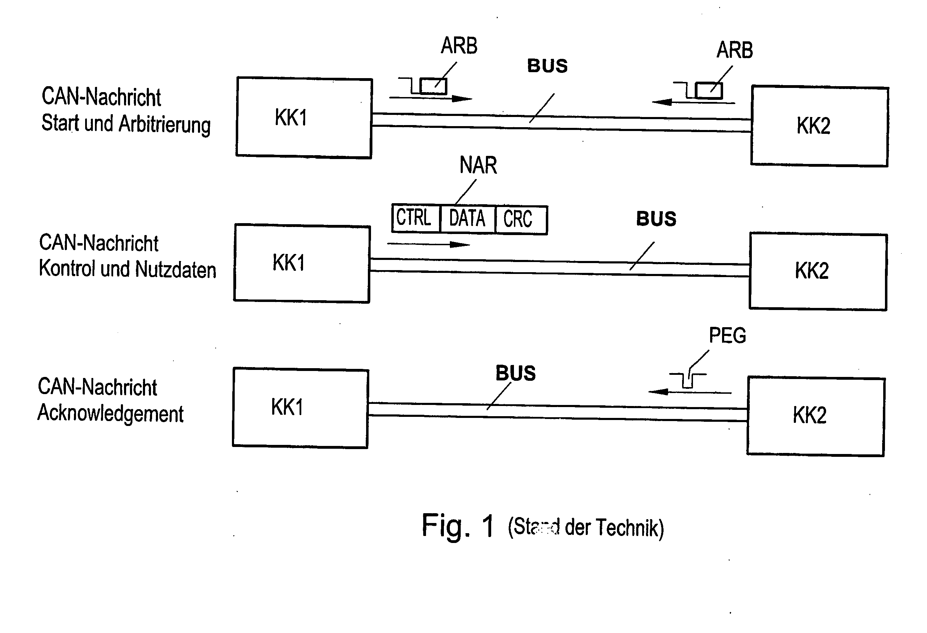

In Fig. 1 ist schematisch der Ablauf einer CAN-Nachrichtenübertragung in einem herkömmlichen CAN-Kommunikationssystem dargestellt. Die Übertragungsrichtungen sind mit Pfeilen gekennzeichnet. Mehrere CAN-Kommunikationsknoten KK1, KK2 senden über einen CAN-Bus BUS gleichzeitig ihre "CAN-Frames" - beginnend mit einem Arbitrierungsfeld ARB mit einem "Identifier-Segment" - um gemeinsam zu der Entscheidung zu gelangen welcher CAN-Kommunikationsknoten KK1, KK2 tatsächlich seine vollständige CAN-Nachricht NAR senden darf. Nachdem der derart bestimmte CAN-Kommunikationsknoten KK1 Dateninhalt DATA und Prüfsumme CRC der CAN Nachricht NAR übertragen hat, bestätigt alle am Bus aktiven CAN- Kommunikationsknoten KK2 die Korrektheit der Prüfsumme durch einen dominaten Pegel PEG während der Acknowledgment-Phase der Nachricht NAR. Der Begriff Acknowledgment-Phase wird hierbei synonym für Acknowledgement-Feld (ACK-Feld) bzw. Acknowldegement-Slot (ACK-Slot) verwendet. Falls von einem Empfänger ein Fehler in der Übertragung erkannt wird, generiert und übermittelt dieser einen Error-Frame.

Nachteilig an den herkömmlichen CAN-Kommunikationssystemen ist vor allem, dass die aus dem Acknowledgeverfahren und dem Arbitrierungsverfahren resultierenden Synchronisationserfordernisse bzw. durch den bidirektionalen Nachrichtenaustausch während dieser Phasen in entscheidendem Ausmaß die erzielbare Datenrate limitieren.

Es ist daher eine Aufgabe der Erfindung, den oben genannten Nachteil zu überwinden.

Diese Aufgabe wird mit einem Verfahren der eingangs genannten Art dadurch gelöst, dass erfindungsgemäß die CAN-Nachricht bereits von dem sendenden Netzknoten mit einem dominanten Pegel in ihrem ACK-Feld versandt wird und ein die CAN-Nachricht empfangender Netzknoten weder einen dominaten Pegel im ACK-Feld generiert noch einen vollständige Error-Frame versendet.

Die erfindungsgemäße Lösung erhöht den erreichbaren Durchsatz von CAN-Bussystemen um ein Vielfaches mit sehr geringem Aufwand bei gleichzeitiger Wahrung der Kompatibilität mit am Bus mithörenden CAN-Testsystemen. Bei der erfindungsgemäßen Lösung erfolgt eine Nachrichtenübertragung stets nur in eine Richtung, nämlich vom Sender zu dem Empfänger. Die Umsetzung der Erfindung ist mit derzeit gängigen CAN Controllern einfach möglich und erfordert in vielen Fällen kaum nennenswerten finanziellen Mehraufwand.

Um eine Nachrichtenübertragung auch über eine längere Übertragungsstrecke zu ermöglichen kann eine Nachrichtenverteileinrichtung vorgesehen sein, elektrische Signale auf dem CAN-Bus bezüglich Pegel, und/oder Zeitverhalten regeneriert, wobei die Tatsache genutzt wird, dass die Ausbreitungsrichtung einer Nachricht nur in eine Richtung erfolgt.

Die oben genannte Aufgabe kann auch mit einem Kommunikationssystem der eingangs genannten Art gelöst werden, welches erfindungsgemäß dazu eingereichtet ist, eine Arbitrierungsentscheidung, darüber welcher Netzknoten sendeberechtigt ist, in einer höheren Protokollschicht als die Übertragung der CAN-Nachricht durchzuführen, die CAN-Nachricht bereits von dem sendenden Netzknoten mit einem dominanten Pegel in ihrem ACK-Feld zu versenden, und zu verhindern, dass ein die CAN-Nachricht empfangender Netzknoten einen dominaten Pegel im ACK-Feld generiert oder einen vollständigen Error-Frame versendet.

Die Erfindung samt weiteren Vorteilen wird im Folgenden anhand einiger nicht einschränkender Ausführungsbeispiele näher erläutert, welche in der Zeichnung dargestellt sind. In dieser zeigen schematisch:
Fig. 2 einen Ablauf des erfindungsgemäßen Verfahrens;
Fig. 3 eine erste Version eines erfindungsgemäßen Kommunikationssystems und
Fig. 4 eine zweite Version eines erfindungsgemäßen Kommunikationssystems.

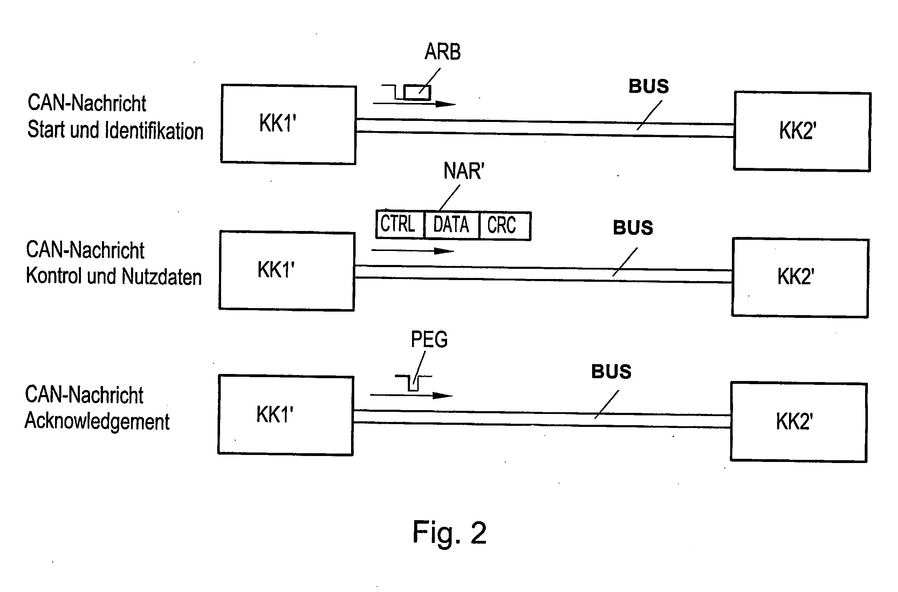

Gemäß Fig. 2 erfolgt gemäß dem erfindungsgemäßen Verfahren eine Arbitrierungsentscheidung in einer höheren Protokollschicht als die Übertragung der CAN-Nachricht. Die CAN-Nachricht NAR' wird bereits von dem sendenden Netzknoten KK1' mit einem dominanten Pegel PEG in ihrem ACK-Feld versandt, wobei ein die CAN-Nachricht empfangender Netzknoten KK2 weder einen dominaten Pegel im ACK-Feld generiert noch einen vollständige Error-Frame versendet.

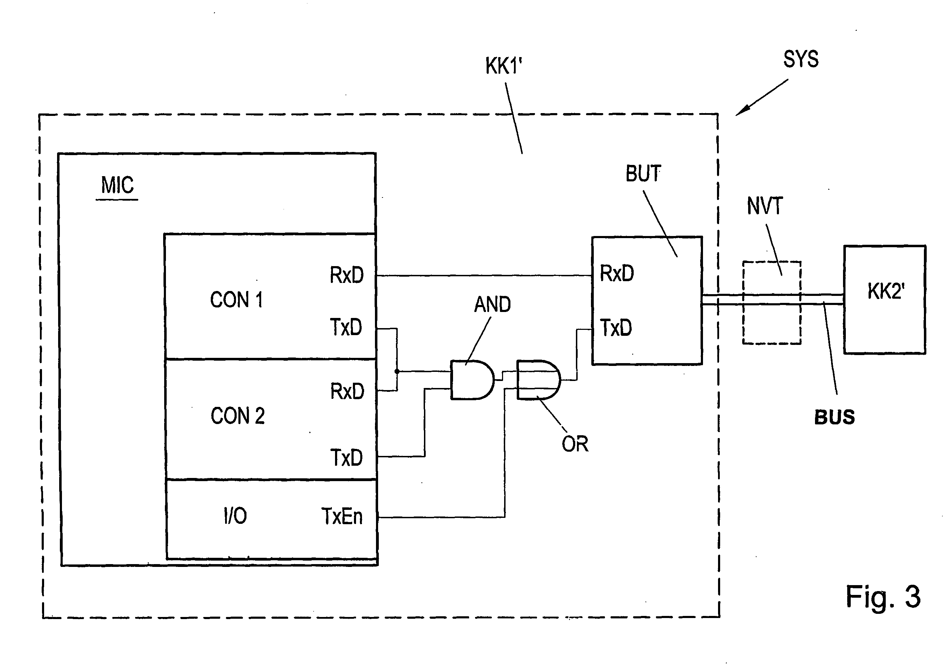

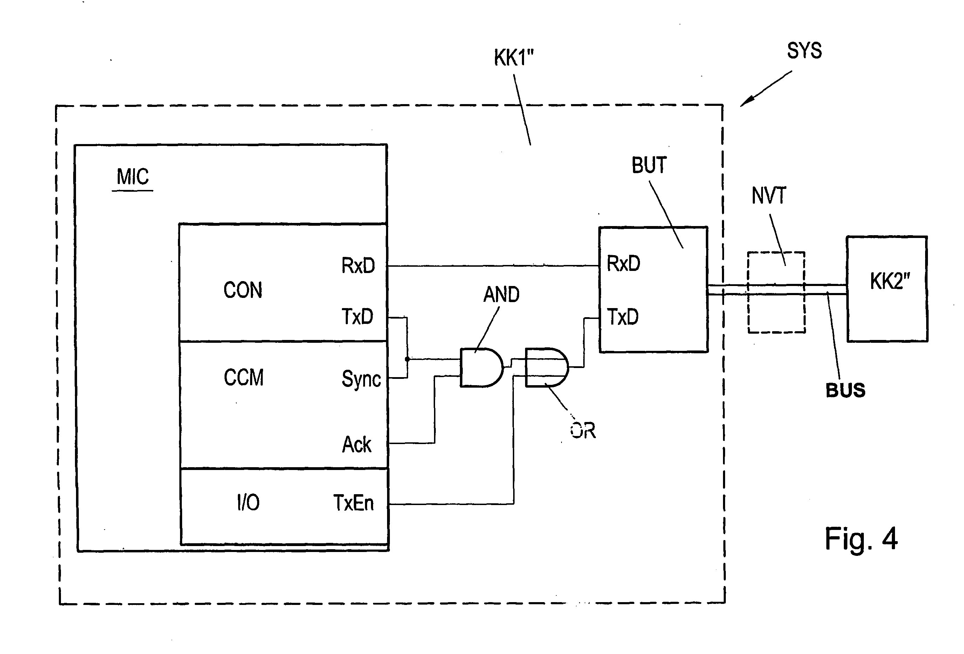

Gemäß der in Fig. 3 und 4 dargestellten Variante eines erfindungsgemäßen Kommunikationssystems SYS ist der sendende Netzknoten KK1' einer CAN-Nachricht so verändert, dass vom ihm eine bereits mit domintantem Acknowledge-Bit versehene CAN-Nachricht versandt wird. Gleichzeitig sind die Empfänger KK2' einer Botschaft so verändert, dass dieser nicht versucht die Korrektheit einer empfangenen Nachricht durch Setzen eines dominaten Pegels in dem Acknowledge-Feld zu bestätigen. Die derart veränderten Knoten KK1, KK2' werden in einem Umfeld eingesetzt, in dem die Arbitrierung in einer höheren Protokollschicht abgewickelt wird. Dies ist zum Beispiel in einem zeitgesteuerten System oder in einem Master-Slave System der Fall. Die Netzknoten KK1' und KK2' entsprechen einander von ihrem funktionalen Aufbau, auch wenn sie von ihrer physikalischen Realisierung unterschiedlich aufgebaut sein können. So kann beispielsweise einer der Netzknoten KK1' bzw. KK1" so wie der in Fig. 3 dargestellte Netzknoten realisiert sein, wohingegen der zweite Netzknoten KK2' bzw. KK2" beispielsweise gemäß der in Fig. 4 gezeigten Ausführungsform ausgebildet sein kann.

Bei der erfindungsgemäßen Lösung erfolgt bei Übertragung einer CAN-Nachricht - im Gegensatz zu den bekannten Verfahren bzw. Kommunikationssystemen - ein (physikalischer) Nachrichtenfluss lediglich in eine Richtung, nämlich vom sendenden Knoten KK1', KK1" zum empfangenden Knoten KK2', KK2".

Die erfindungsgemäße Veränderung der Kommunikationsknoten KK1', KK2', KK1", KK2" (Sender/Empfänger) hat folgende Auswirkungen:
a) Das Timing der Bussignale wird im Vergleich zum konventionellen System deutlich unkritischer. Bei konventionellen CAN-Systemen bestimmt die Gesamtdurchlaufzeit durch zwei Bustreiber die maximale Datenrate. In Systemen, in denen die vorliegende Erfindung angewandt wird, bestimmt die Differenz der Gesamtdurchlaufzeiten einer fallenden und einer steigenden Flanke die maximale Datenrate. Diese ist bei gängigen Bustreibern wesentlich geringer als die Gesamtdurchlaufzeit. Somit wird die erreichbare Datenrate erhöht.
b) Zusätzlich können Bustreiber die dominant/dominant arbeiten verwendet werden. In konventionellen CAN Systemen können nur Bustreiber mit dominant/rezessivem Pegel zum Einsatz kommen. Bustreiber, mit dominant/ dominanten Pegel haben generell geringere Verzögerungen und geringere Schieflage der Verzögerung als solche mit dominant/ rezessivem Pegel. Auch dadurch wird die erreichbare Datenrate erhöht.

Die Umsetzung der Erfindung kann in verschiedener Weise erfolgen. Im Folgenden werden drei Varianten vorgeschlagen. Allen Varianten ist gemein, dass die Arbitrierung des CAN-Busses in einer höheren Schicht des Übertragungsprotokolls geregelt ist.

In Fig. 3 ist die Umsetzung der Erfindung unter Verwendung zweier CAN Controller CON1, CON2 skizziert. Der Netzknoten KK1' weist gemäß dieser Ausführungsform einen Mikrokontroller MIC und zwei CAN-Controller CON1, CON2 auf. Der erste CAN-Controller CON1 sendet und empfängt Frames. Der zweite CAN-Controller CON2, der sich in demselben Netzknoten KK1' wie der erste CAN-Controller CON1 befindet, empfängt den Sendestrom des ersten CAN-Controllers CON1. Die Eingangsleitungen sind mit RxD und die Ausgangsleitungen mit TxD bezeichnet.

Der zweite CAN-Controller CON2 generiert das Acknowledge Bit für die Sendeframes des ersten CAN-Controllers CON1. Durch eine logische Und-Verknüpfung AND wird das Acknowledge Bit dem Sendeframe beigefügt und danach durch den Bustreiber BUT an den CAN-Bus BUS gelegt. Am CAN-Bus BUS ist nun ein korrekter CAN-Frame sichtbar. Um das Verzerren des Timings eines derart generierten CAN-Frames durch weitere Acknowledge Bits zu verhindern, wird das Senden aller anderen Netzknoten KK2' im Kommunikationssystem zu diesem Zeitpunkt durch die Leitung Transmit-enable TxEn unterbunden.

Das Ergebnis der Arbitrierung, welche auf einer übergeordneten Protokollschicht stattfindet, liegt in dem Mikrocontroller MIC vor, wobei in Abhängigkeit von dem Arbitrierungsergebnis ein entsprechendes Transmit-enable Signal erzeugt wird. Der Algorithmus, nach welchem die Arbitrierung erfolgt, ist von untergeordneter Bedeutung für die gegenständliche Erfindung, wesentlich ist hierbei nur, dass das Ergebnis der Arbitrierung unabhängig von den CAN-Controllern gewonnen wird, da der Wert des Transmit-enable Signals von dem Ergebnis der Arbitrierung abhängt. Das Transmit-enable Signal des Netzknotens KK1' wird nur aktiviert, wenn der jeweilige Netzknoten KK1' eine Nachricht NAR senden soll. Wenn der Netzknoten KK1 nicht senden soll, liegt an dem Ausgang der ODER-Verknüpfung ein rezessiver Pegel vor. Da zum Versenden einer CAN-Nachricht NAR jedoch ein dominater Pegel vorliegen muss, wird von dem BUS-Treiber BUT in diesem Fall keine Nachricht NAR gesendet. Soll hingegen eine CAN-Nachricht NAR versendet werden, so wird von dem Mikrocontroller MIC ein Transmit-enable Signal erzeugt, welches einem dominaten Pegel entspricht. Hierbei werden das Transmit-enable Signal und das Ausgangssignal der logischen UND-Verknüpfung AND einer logischen ODER-Verknüpfung OR zugeführt.

In Figur 4 ist die Umsetzung der Erfindung durch die Verwendung eines CAN-Controllers CON und eines Compare/Capture Moduls CCM eines Mikrocontrollers dargestellt. Das Acknowledge Bit wird in diesem Fall durch den Mikrocontroller MIC erzeugt, indem er den Zeitpunkt des "Start of Frame" der Sendeframes misst und zu gegebener Zeit das Acknowledge-Bit erzeugt. Abgesehen von der Art der Erzeugung des Acknowledge-Bits ist diese Variante mit der ersten ident. Es handelt sich hierbei um eine sehr kostengünstige Implementierung der Erfindung, die mit herkömmlichen Mikrocontrollern umsetzbar ist.

In einer dritten Variante kommt ein CAN Controller zum Einsatz, der dazu eingerichtet ist, beispielsweise durch entsprechende Programmierung, einen Frame mit bereits gesetztem Acknowledge-Bit zu erzeugen und im Fall des Empfangens einer CAN-Nachricht kein Acknowledge-Bit auf den Bus zu legen, wenn sie einen Frame mit gültiger Prüfsumme CRC enthält.

Um eine Nachrichtenübermittlung auch über längere Übertragungsstrecke ermöglichen zu können kann eine Nachrichtenverteileinrichtung NVT, die elektrischen Signale an dem CAN-Bus BUS bezüglich Pegel und/oder Zeitverhalten regeneriert vorgesehen sein. Die Nachrichtenverteileinrichtung NVT nutzt hierbei die Tatsache, dass die Ausbreitungsrichtung einer Nachricht NAR nur in eine Richtung erfolgt.

## Patentansprüche

1. Verfahren zum Übertragen von CAN-Nachrichten (NAR) über einen CAN-Bus (BUS) in einem Kommunikationssystem (SYS), welches mehrere Netzknoten (KK1, KK2, KK1', KK2', KK1", KK2") mit je zumindest einem CAN-Kontroller (CON, CON1, CON2) aufweist, wobei eine Arbitrierung um die Berechtigung eines Netzknotens (KK1, KK2, KK1', KK2', KK1", KK2") eine CAN-Nachricht (NAR) zu senden erfolgt, und eine Arbitrierungsentscheidung in einer höheren Protokollschicht als die Übertragung der CAN-Nachricht (NAR) erfolgt,
**dadurch gekennzeichnet, dass**
die die CAN-Nachricht (NAR) bereits von dem sendenden Netzknoten (KK1, KK2, KK1') mit einem dominanten Pegel in ihrem ACK-Feld versandt wird, wobei ein die CAN-Nachricht (NAR) empfangender Netzknoten (KK2', KK1", KK2") weder einen dominaten Pegel im ACK-Feld generiert noch einen vollständigen Error-Frame versendet.

2. Verfahren nach Anspruch 1 **dadurch gekennzeichnet, dass** eine Nachrichtenverteileinrichtung (NVT) elektrische Signale auf dem CAN-Bus (BUS) bezüglich Pegel und/ oder Zeitverhalten regeneriert, wobei die Tatsache genutzt wird, dass die Ausbreitungsrichtung einer Nachricht (NAR) nur in eine Richtung erfolgt.

3. Kommunikationssystem (SYS), welches mehrere Netzknoten (KK1, KK2, KK1', KK2', KK1", KK2") mit je zumindest einem CAN-Kontroller (CON, CON1, CON2) aufweist, wobei das Kommunikationssystem (SYS) dazu eingerichtet ist, eine Arbitrierung um die Berechtigung eines Netzknotens (KK1, KK2, KK1', KK2', KK1", KK2") eine CAN-Nachricht (NAR) zu senden durchzuführen, wobei das Kommunikationssystem (SYS) dazu eingereichtet ist, eine Arbitrierungsentscheidung, darüber welcher Netzknoten (KK1, KK2, KK1', KK2', KK1", KK2") sendeberechtigt ist, in einer höheren Protokollschicht als die Übertragung der CAN-Nachricht (NAR) durchzuführen, **dadurch gekennzeichnet, dass** die CAN-Nachricht (NAR) bereits von dem sendenden Netzknoten (KK1, KK2, KK1') mit einem dominanten Pegel in ihrem ACK-Feld zu versenden, und zu verhindern, dass ein die CAN-Nachricht (NAR) empfangender Netzknoten (KK2', KK1", KK2") einen dominaten Pegel im ACK-Feld generiert oder einen vollständigen Error-Frame versendet.

4. Kommunikationssystem (SYS) nach Anspruch 3, **dadurch gekennzeichnet, dass** eine Nachrichtenverteileinrichtung (NVT) vorgesehen ist, welche elektrische Signale auf dem CAN-Bus (BUS) bezüglich Pegel und/oder Zeitverhalten unter Ausnutzung der Tatsache, dass die Ausbreitungsrichtung einer Nachricht (NAR) nur in eine Richtung erfolgt, regeneriert.

## Claims

1. A method for transmitting CAN messages (NAR) via a CAN bus (BUS) in a communication system (SYS) comprising a plurality of network nodes (KK1, KK2, KK1', KK2', KK1", KK2"), of which each has at least one CAN controller (CON, CON1, CON2), wherein arbitration on the legitimacy of a node (KK1, KK2, KK1', KK2, KK1", KK2") to transmit a CAN message (NAR) is effected, and an arbitration decision is effected in a higher protocol layer than the transmission of the CAN message (NAR),
**characterized in that**
the CAN message (NAR) is dispatched by the transmitting network node (KK1, KK2, KK1') already having a dominant level in its ACK field, whereby a network node (KK2', KK1", KK2") receiving the CAN message (NAR) neither generates a dominant level in the ACK field nor dispatches a complete error frame.

2. The method as defined in claim 1, **characterized in that** a message distribution system (NVT) regenerates electric signals on the CAN bus (BUS) with reference to level and/or time behavior, exploiting the fact that the direction of propagation of a message (NAR) is unidirectional.

3. A communication system (SYS), comprising a plurality of network nodes (KK1, KK2, KK1', KK2', KK1", KK2") each having at least one CAN controller (CON, CON1, CON2), wherein said communication system (SYS) is adapted to effect an arbitration on the legitimacy of a node (KK1, KK2, KK1', KK2, KK1", KK2") to transmit a CAN message (NAR), wherein said communication system (SYS) is adapted to carry out an arbitration decision in a higher protocol layer than the transmission of the CAN message (NAR), the arbitration decision concerning which of said nodes (KK1, KK2, KK1', KK2', KK1", KK2") is entitled to effect dispatch of said message
**characterized in that**
the CAN message (NAR) is dispatched by the transmitting network node (KK1, KK2, KK1') already having a dominant level in its ACK field, and that the network node (KK2', KK1 ", KK2") receiving a CAN message (NAR) is prevented from generating a dominant level in its ACK field or dispatching a complete error frame.

4. The communication system (SYS) as defined in claim 3, **characterized in that** a message distribution system (NVT) is provided which regenerates electrical signals on said CAN bus (BUS) with reference to level and/or time behavior whilst exploiting the fact that the direction of propagation of a message (NAR) is unidirectional.

## Revendications

1. Procédé pour transmettre des messages CAN (NAR) sur un bus CAN (BUS) dans un système de communication (SYS) qui comporte plusieurs noeuds de réseau (KK1, KK2, KK1', KK2' , KK1", KK2") pourvu chacun d'au moins un contrôleur CAN (CON, CON1, CON2), un arbitrage étant effectué pour autoriser un noeud de réseau (KK1, KK2, KK1', KK2' , KK1", KK2") à envoyer un message CAN (NAR) et une décision d'arbitrage étant effectuée dans une couche de protocole plus haute que la transmission du message CAN (NAR),
**caractérisé en ce que**
le message CAN (NAR) est déjà envoyé par le noeud de réseau émetteur (KK1, KK2, KK1') ayant un niveau dominant dans son champ ACK, un noeud de réseau (KK2', KK1" , KK2") recevant le message CAN (NAR) ne générant pas de niveau dominant dans le champ ACK et n'envoyant pas de message Error Frame.

2. Procédé selon la revendication 1, **caractérisé en ce qu'**un dispositif de distribution de messages (NVT) régénère des signaux électriques sur le bus CAN (BUS) relatifs au niveau et/ou à la synchronisation temporelle, en se servant du fait que la diffusion d'un message (NAR) n'a lieu que dans une seule direction.

3. Système de communication (SYS) qui comporte plusieurs noeuds de réseau (KK1, KK2, KK1', KK2', KK1", KK2") pourvu chacun d'au moins un contrôleur CAN (CON, CON1, CON2), le système de communication (SYS) étant agencé pour effectuer un arbitrage pour autoriser un noeud de réseau (KK1, KK2, KK1', KK2', KK1" , KK2") à envoyer un message CAN (NAR), le système de communication (SYS) étant agencé pour effectuer une décision d'arbitrage, concernant le noeud de réseau (KK1, KK2, KK1', KK2', KK1" , KK2") qui est autorisé à envoyer un message, dans une couche de protocole plus haute que la transmission du message CAN (NAR),
**caractérisé en ce que** le message CAN (NAR) est déjà envoyé par le noeud de réseau émetteur (KK1, KK2, KK1') avec un niveau dominant dans son champ ACK, et qu'il est empêché qu'un noeud de réseau (KK2', KK1", KK2") recevant le message CAN (NAR) ne génère un niveau dominant dans le champ ACK ou n'envoie un message complet Error Frame.

4. Système de communication (SYS) selon la revendication 3, **caractérisé en ce qu'**il est prévu un dispositif de distribution de messages (NVT) qui régénère des signaux électriques sur le bus CAN (BUS) relatifs au niveau et/ou à la synchronisation temporelle en se servant du fait que la diffusion d'un message (NAR) n'est effectuée que dans une direction.
